# EUROPEAN PATENT APPLICATION

(11) **EP 4 516 651 A1**
(43) Date of publication of application: **05.03.2025**
(21) Application number: 24192228.5
(22) Date of filing: 01.08.2024
(51) Int. Cl.: B62J 45/42, B62J 27/00, B62J 45/41, B62J 50/21, B62J 6/26, B62J 15/04, B62J 45/00, B62J 23/00, B60R 21/0134, H01Q 1/00, H01Q 1/32, G08G 1/16, B62J 6/04, B62J 6/027, B62J 50/26

(54) **STRADDLE TYPE VEHICLE**

(30) Priority: 28.08.2023 JP 2023138409
(71) Applicant: Kawasaki Motors, Ltd., Akashi, Hyogo 673-8666 (JP)
(72) Inventor: KOHARA, Hirokazu, Akashi-shi, Hyogo, 673-8666 (JP); IWAMOTO, Taro, Akashi-shi, Hyogo, 673-8666 (JP); KASHIHARA, Takeshi, Akashi-shi, Hyogo, 673-8666 (JP)
(74) Representative: Müller-Boré & Partner Patentanwälte PartG mbB

(57) **Abstract**

A straddle type vehicle includes a vehicle body frame (2); a fixed member (3,5) which is supported by the vehicle body frame and to which an electrical component (18) is fixed; and a sensor unit (62, 63) including a sensor (621, 631) for detecting an object around a vehicle body and fixed to the fixed member together with the electrical component via a rubber member (31, 51).

## Description

### FIELD OF INVENTION

The present disclosure relates to a straddle type vehicle.

### BACKGROUND ART

Japanese Patent No. 7084476 discloses a straddle type vehicle on which a sensor unit such as an antenna, a radar, and a camera is mounted. In the straddle type vehicle, the sensor unit is disposed above or below a front cowl covering a front part of the vehicle in order to sense a situation in front of the vehicle.

The sensor unit needs to be fixed at an appropriate position of the vehicle so as to be able to suppress vibration during traveling of the vehicle, or the like. It is difficult to fix the sensor unit at an appropriate position of the vehicle such that vibration can be suppressed without newly providing a fixing structure of the sensor unit.

### SUMMARY OF THE INVENTION

An object of the present disclosure is to provide a straddle type vehicle enabling a sensor unit to be efficiently fixed at an appropriate position of the vehicle so as to suppress vibration of the sensor unit.

A straddle type vehicle according to one aspect of the present disclosure includes a vehicle body frame; a fixed member which is attached to the vehicle body frame and to which an electrical component is fixed; and a sensor unit including a sensor for detecting an object around a vehicle body and fixed to the fixed member together with the electrical component via a rubber member.

### BRIEF DESCRIPTION OF THE DRAWINGS

Fig. 1 is a side view of a motorcycle which is a straddle type vehicle according to an embodiment of the present disclosure.
Fig. 2 is an enlarged perspective view illustrating the vicinity of a meter unit and a front camera unit in the motorcycle.
Fig. 3 is a perspective view illustrating a state of the meter unit and the front camera unit that are fixed to a meter bracket.
Fig. 4 is a cross-sectional view illustrating a state of a license lamp unit and a rear camera unit that are fixed to a rear flap in the motorcycle.
Fig. 5 is an enlarged perspective view illustrating the vicinity of the license lamp unit and the rear camera unit.

### DETAILED DESCRIPTION

### [Vehicle Body Structure of Motorcycle]

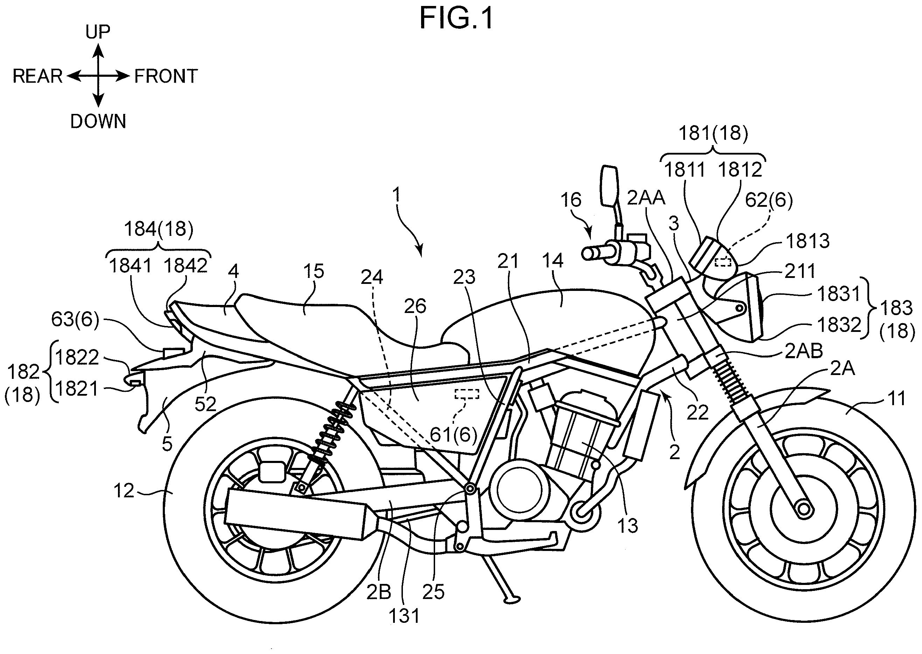

Fig. 1 is a side view of a motorcycle according to an embodiment of the present invention as viewed from the right side. As shown in this figure, the motorcycle is a so-called naked straddle type vehicle that does not have a cowl forming a contour of a vehicle body. The motorcycle includes a vehicle body 1, a front wheel 11 and a rear wheel 12, an engine 13, a fuel tank 14, a seat 15, and handlebars 16. The vehicle body 1 forms a main body part of the motorcycle. The vehicle body 1 extends in a front-rear direction indicating forward and backward directions of the motorcycle, and has a predetermined vehicle width in a left-right direction as viewed from a driver who drives the motorcycle. In other words, a vehicle width direction of the vehicle body 1 coincides with the left-right direction. The front wheel 11 and the rear wheel 12 are a pair of front and rear wheels that movably support the vehicle body 1. The engine 13 is a driving source that generates a driving force for rotating the rear wheel 12, in other words, a driving force for traveling the motorcycle. The fuel tank 14 is a tank that stores fuel to be supplied to the engine 13. The seat 15 is a seat on which the driver and a passenger are seated. The handlebars 16 are steering bars to be gripped when the driver steers the front wheel 11. The motorcycle is a two-wheeled automobile that travels by the driving force of the engine 13, and is one kind of straddle type vehicle.

An electrical component 18 and a drive recorder 6 are mounted on the vehicle body 1. The electrical component 18 is an electronic apparatus equipped on the vehicle body 1. The drive recorder 6 is a device that records an image captured around the vehicle body 1. Details of the electrical component 18 and the drive recorder 6 will be described later.

The vehicle body 1 includes a vehicle body frame 2, a front fork 2A, a swing arm 2B, a rear fender 4, and a rear flap 5. The vehicle body frame 2 is a frame structure forming a framework of the vehicle body 1. The front fork 2A is a member that is supported at a front end of the vehicle body frame 2 and couples the handlebars 16 and the front wheel 11. The swing arm 2B is a member that couples the vehicle body frame 2 and the rear wheel 12. The rear fender 4 is a member extending rearward from a rear end of the vehicle body frame 2. The rear flap 5 is a member that is attached to a rear part of the rear fender 4 and covers the rear wheel 12 from above.

The vehicle body frame 2 has a head pipe 211, a main frame 21, a lower frame 22, a center frame 23, a rear frame 24, and a pivot shaft 25.

The head pipe 211 is a cylindrical member that forms the front end of the vehicle body frame 2 and extends in a vertical direction such that a steering shaft can be inserted. The head pipe 211 turnably supports the front fork 2A. The front fork 2A is a member that couples the handlebars 16 and the front wheel 11 in a state of being supported by the head pipe 211. A pair of left and right front forks 2A is provided so as to sandwich the front wheel 11. The front wheel 11 is attached to lower ends of the pair of left and right front forks 2A. Upper ends of the pair of left and right front forks 2A are coupled by an upper bracket 2AA. The pair of left and right front forks 2A is coupled by an under bracket 2AB at a position below the upper bracket 2AA. The handlebars 16 are attached to the upper ends of the pair of left and right front forks 2A via the upper bracket 2AA. The pair of left and right front forks 2A turns about the steering shaft inserted into the head pipe 211 according to operation of the handlebars 16. In accordance with the turning of the pair of left and right front forks 2A, the front wheel 11 attached to the lower ends of the front forks 2A can be steered.

The main frame 21 is a frame member extending from an upper part of the head pipe 211 while inclining rearward and downward. The lower frame 22 is a frame member extending from a lower part of the head pipe 211 while inclining rearward and downward, and is disposed so as to be more inclined downward than the main frame 21. The center frame 23 is a frame member extending from a middle part of the main frame 21 while inclining rearward and downward, and is disposed such that a distance from the main frame 21 increases toward the rear. The rear frame 24 is a frame member extending from a lower end of the center frame 23 while inclining rearward and upward. A rear end of the main frame 21 is coupled to a rear end of the rear frame 24. A coupling part between the rear end of the main frame 21 and the rear end of the rear frame 24 forms the rear end of the vehicle body frame 2.

The vehicle body frame 2 has a bilaterally symmetrical structure about the head pipe 211. Specifically, the above-described main frame 21, lower frame 22, center frame 23, and rear frame 24 in the vehicle body frame 2 are provided not only on the right side of the vehicle body 1 but also on the left side of the vehicle body 1 illustrated in Fig. 1. In other words, the vehicle body frame 2 has a pair of the main frames 21 and a pair of the lower frames 22 extending while branching from the head pipe 211 to the left and the right, a pair of the rear frames 24 coupled to the rear ends of the respective main frames 21, and a pair of the center frames 23 coupling the middle parts of the respective main frames 21 and front ends of the respective rear frames 24.

The pivot shaft 25 is a shaft member extending in the vehicle width direction, and is coupled to the front end of the rear frame 24 or the lower end of the center frame 23. A front end of the swing arm 2B is connected to the pivot shaft 25. The swing arm 2B is an arm extending in the front-rear direction and coupling the vehicle body frame 2 and the rear wheel 12. The swing arm 2B has its front end connected to the pivot shaft 25 to be swingable in the vertical direction around the pivot shaft 25. The rear wheel 12 is pivotally supported on a rear end of the swing arm 2B. In other words, the swing arm 2B supports the rear wheel 12 so as to be swingable in the vertical direction with respect to the vehicle body frame 2.

Side covers 26 are attached to both left and right side surfaces of the vehicle body 1. The side cover 26 is an exterior component attached to the vehicle body frame 2 so as to mainly cover a region below a front part of the seat 15 on the side surface of the vehicle body 1. Specifically, the side cover 26 is attached so as to cover a triangular area in side view surrounded by the main frame 21, the center frame 23, and the rear frame 24.

The engine 13 is, for example, a four-stroke internal combustion engine. The engine 13 is supported at the vehicle body frame 2 by fixing a cylinder head or the like between a front part of the main frame 21 and the lower frame 22. Output rotation of the engine 13 is transmitted to the rear wheel 12 via a power transmission member such as a chain 131. The fuel tank 14 is supported at the vehicle body frame 2 at an upper front part of the vehicle body 1, which is a part above the engine 13.

The rear fender 4 is attached to the rear end of the vehicle body frame 2, specifically, to the coupling part between the rear end of the main frame 21 and the rear end of the rear frame 24. The rear fender 4 extends rearward from the rear end of the vehicle body frame 2. The seat 15 is attached to a rear part of the main frame 21 so as to cover the rear fender 4 from above. The seat 15 is disposed behind the fuel tank 14. The rear flap 5 is attached to the rear part of the rear fender 4. The rear flap 5 being attached to the rear part of the rear fender 4 is disposed behind the coupling part between the rear end of the main frame 21 and the rear end of the rear frame 24. In other words, the rear flap 5 is disposed behind the rear end of the vehicle body frame 2. The rear flap 5 is a member that covers the rear wheel 12 from above. The rear flap 5 is supported at the rear end of the vehicle body frame 2 via the rear fender 4.

### [Details of Electrical Component and Drive Recorder]

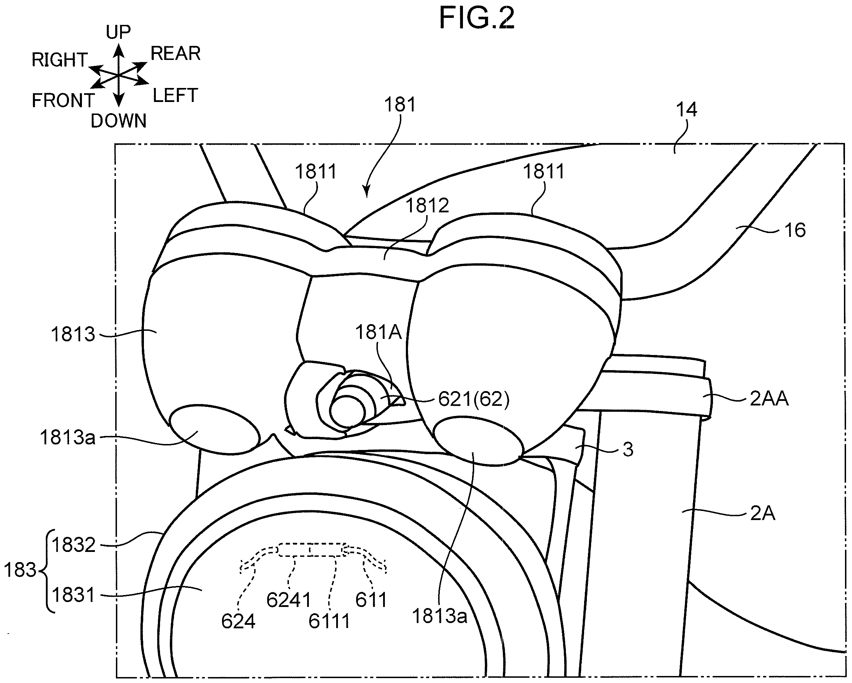

Next, details of the electrical component 18 and the drive recorder 6 mounted on the vehicle body 1 will be described with reference to Figs. 2 to 5 in addition to Fig. 1.

### <Electrical Component>

The electrical component 18 is an electronic apparatus equipped on the vehicle body 1. In the present embodiment, the electrical component 18 is an electrical component that is required to be equipped when traveling on a public road according to safety standards of road transportation vehicles defined based on Road Trucking Vehicle Act. Examples of such electrical component 18 include a meter unit 181, a license lamp unit 182, a headlamp unit 183, and a tail lamp unit 184.

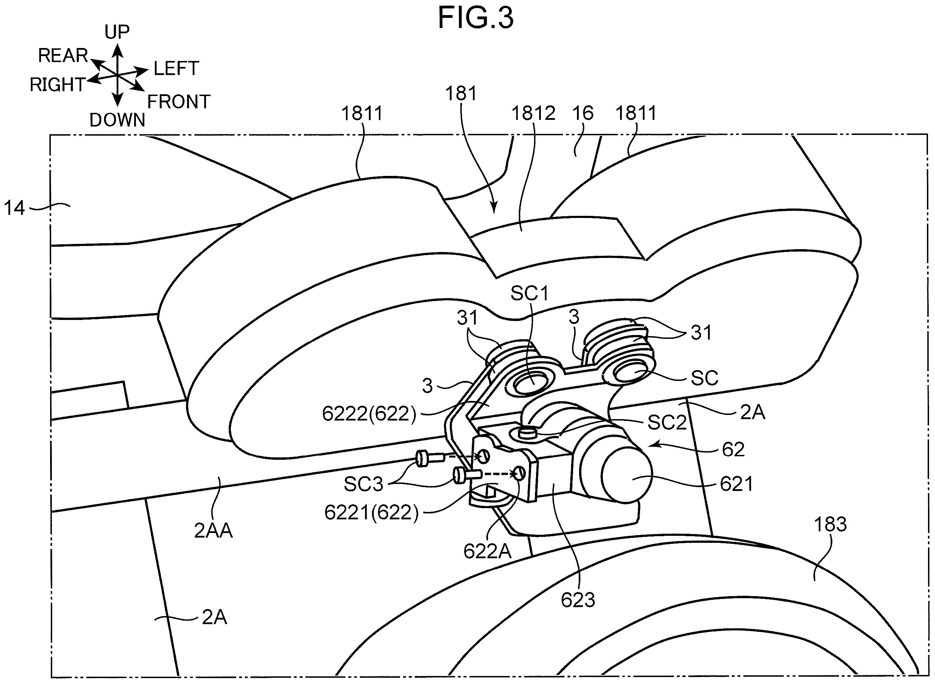

The meter unit 181 is a unit that includes a meter 1811 and a meter casing 1812 that houses the meter 1811. In the present embodiment, two meters 1811 are prepared. One meter 1811 is a meter that displays a speed of the vehicle body 1. The other meter 1811 is a meter that displays an engine speed of the engine 13. As shown in Figs. 2 and 3, the two meters 1811 are disposed side by side in the vehicle width direction in front of the head pipe 211 located at the center in the vehicle width direction at the front end of the vehicle body frame 2 so as to have a bilaterally symmetrical positional relationship with respect to the head pipe 211. Specifically, the two meters 1811 are disposed in front of the head pipe 211 and are disposed side by side in the vehicle width direction so as to be positioned between the upper ends of the pair of left and right front forks 2A in the vehicle width direction. The meter casing 1812 is a casing that integrally houses the two meters 1811 such that display surfaces of the meters 1811 face rearward. The meter casing 1812 is made of a non-metallic, for example, synthetic resin.

The meter unit 181 is fixed to the meter bracket 3. Specifically, the meter unit 181 is fixed to the meter bracket 3 by fixing a back surface of the meter casing 1812 facing the front to the meter bracket 3 by a fastening member SC1 such as a screw member via a meter rubber member 31. The meter rubber member 31 is a rubber member for suppressing vibration of the meter unit 181, and is made of an elastically deformable rubber material or the like. In the present embodiment, the meter unit 181 is fixed to the meter bracket 3 via two meter rubber members 31. The two meter rubber members 31 are disposed in front of the head pipe 211 and between the pair of left and right front forks 2A, and are disposed side by side at a predetermined interval in the vehicle width direction in a vehicle width center region including a center position in the vehicle width direction of the vehicle body 1.

The meter bracket 3 is a fixed member to which the meter unit 181, which is one kind of the electrical component 18, is fixed. The meter bracket 3 is attached to the pair of left and right front forks 2A or the upper bracket 2AA so as to be positioned in front of the head pipe 211. Specifically, the meter bracket 3 is supported by the head pipe 211, which is the front end of the vehicle body frame 2, via the pair of left and right front forks 2A or the upper bracket 2AA. As described above, the pair of left and right front forks 2A or the upper bracket 2AA to which the meter bracket 3 is attached is turnable in accordance with the operation of the handlebars 16. Therefore, the meter unit 181 fixed to the meter bracket 3 is turnable in accordance with the turning of the pair of left and right front forks 2A or the upper bracket 2AA.

A meter cover 1813 is attached to the front side of the meter casing 1812 in the meter unit 181. The meter cover 1813 is a cover member that covers the back surface of the meter casing 1812 facing the front and a part of the meter bracket 3 from the front. Since the meter bracket 3 and the like are covered with the meter cover 1813, the appearance around the meter unit 181 is improved. The meter cover 1813 is made of a non-metallic, for example, synthetic resin.

The license lamp unit 182 is a unit including a license lamp 1821 and a license lamp casing 1822. The license lamp 1821 is a lamp for irradiating a license plate disposed at a rear end of the vehicle body 1 with light. The license lamp casing 1822 is a lamp casing that houses the license lamp 1821. The license lamp casing 1822 is made of a non-metallic, for example, synthetic resin.

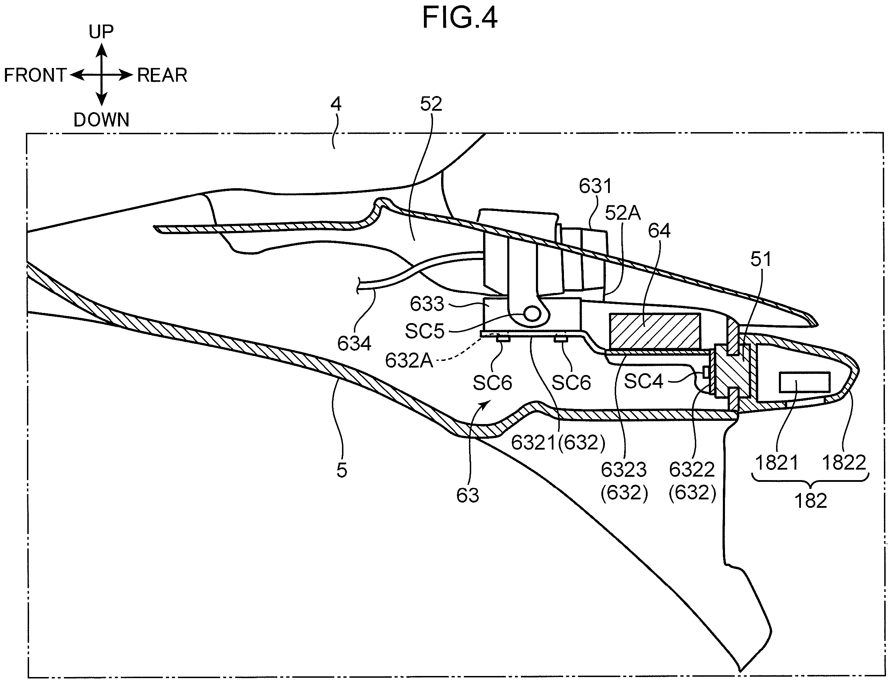

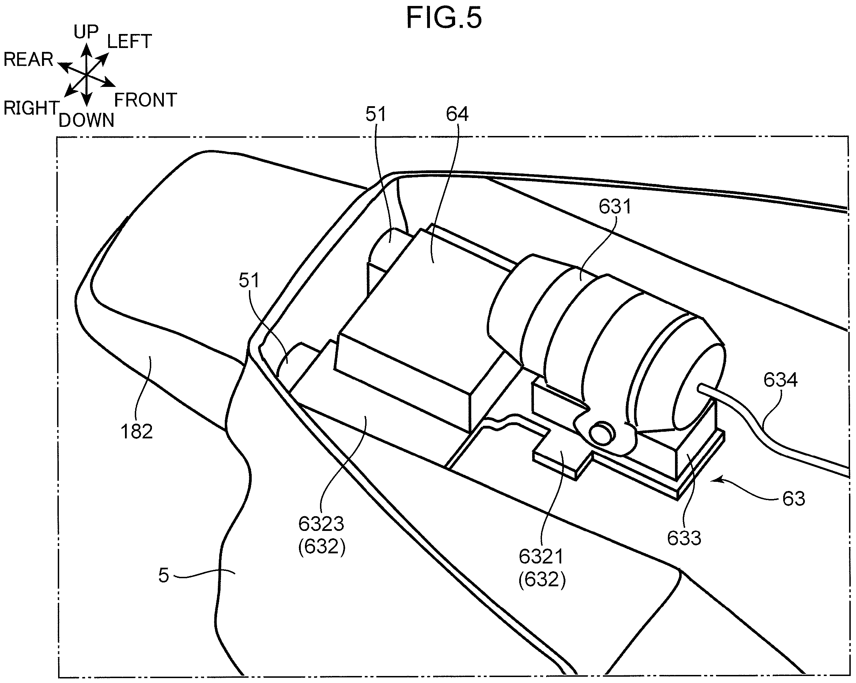

As illustrated in Figs. 4 and 5, the license lamp unit 182 is fixed to the rear flap 5. Specifically, the license lamp casing 1822 is fixed to a rear end of the rear flap 5 via a flap rubber member 51 by a fastening member SC4 such as a screw member, thereby fixing the license lamp unit 182 to the rear flap 5. The license lamp unit 182 protrudes rearward from the rear end of the rear flap 5 while being fixed to the rear flap 5. The flap rubber member 51 is a rubber member for suppressing vibration of the license lamp unit 182, and is made of an elastically deformable rubber material or the like. In the present embodiment, the license lamp unit 182 is fixed to the rear end of the rear flap 5 via the two flap rubber members 51. The two flap rubber members 51 are disposed at the rear end of the rear flap 5 so as to be disposed at a predetermined interval in the vehicle width direction with the the center position in the vehicle width direction of the vehicle body 1 interposed therebetween.

The rear flap 5 is a fixed member to which the license lamp unit 182, which is one kind of the electrical component 18, is fixed. As described above, the rear flap 5 being attached to the rear part of the rear fender 4 is disposed behind the coupling part between the rear end of the main frame 21 and the rear end of the rear frame 24. In other words, the rear flap 5 is supported at the rear end of the vehicle body frame 2 via the rear fender 4. The rear flap 5 is made of a non-metallic, for example, synthetic resin.

A flap cover 52 is attached above the rear flap 5. The flap cover 52 is a cover member that covers the rear flap 5 from above in a state where the license lamp unit 182 protrudes rearward from the rear end of the rear flap 5. The flap cover 52 is made of a non-metallic, for example, synthetic resin.

As shown in Fig. 1, the headlamp unit 183 is a unit including a headlamp 1831 and a headlamp casing 1832. The headlamp 1831 is a lamp for irradiating an area in front of the vehicle body 1 with light. The headlamp casing 1832 is a lamp casing that houses the headlamp 1831. The headlamp casing 1832 is made of a non-metallic, for example, synthetic resin.

The headlamp unit 183 is fixed to the meter bracket 3 below the meter unit 181. Specifically, the headlamp casing 1832 is fixed to the meter bracket 3 via a rubber member, thereby fixing the headlamp unit 183 to the meter bracket 3. The headlamp unit 183 is disposed below the meter unit 181 while being fixed to the meter bracket 3.

As described above, the meter bracket 3 is attached to the pair of left and right front forks 2A or the upper bracket 2AA so as to be positioned in front of the head pipe 211. Therefore, the headlamp unit 183 fixed to the meter bracket 3 is turnable in accordance with the turning of the pair of left and right front forks 2A or the upper bracket 2AA, similarly to the meter unit 181.

As shown in Fig. 1, the tail lamp unit 184 is a unit including a tail lamp 1841 and a tail lamp casing 1842. The tail lamp 1841 is a lamp for irradiating an area behind the vehicle body 1 with light. The tail lamp casing 1842 is a lamp casing that houses the tail lamp 1841. The tail lamp casing 1842 is made of a non-metallic, for example, synthetic resin.

The tail lamp unit 184 is fixed to the rear fender 4. Specifically, the tail lamp casing 1842 is fixed to a rear end of the rear fender 4 via a rubber member, thereby fixing the tail lamp unit 184 to the rear fender 4.

As described above, the rear fender 4 extends rearward from the coupling part between the rear end of the main frame 21 and the rear end of the rear frame 24. In other words, the rear fender 4 is supported at the rear end of the vehicle body frame 2, with the tail lamp unit 184 being fixed to the rear end of the rear fender 4.

### <Drive Recorder>

The drive recorder 6 includes a recorder main body 61, a front camera unit 62, a rear camera unit 63, and a GPS antenna 64. The front camera unit 62 is a unit including a front camera 621 that captures an image of an area in front of the vehicle body 1 as a moving image. The rear camera unit 63 is a unit including a rear camera 631 that captures an image of the area behind the vehicle body 1 as a moving image. The GPS antenna 64 is an antenna that receives a signal indicating position information transmitted from a GPS satellite. The recorder main body 61 is a device that stores imaging information including images captured by the front camera 621 and the rear camera 631. The recorder main body 61 is electrically connected to the front camera 621, the rear camera 631, and the GPS antenna 64 via a harness.

Arrangement place of the recorder main body 61 is not particularly limited. In the example illustrated in Fig. 1, the recorder main body 61 is disposed inside in the vehicle width direction of the side cover 26 attached to the vehicle body frame 2 so as to cover the side surface of the vehicle body 1. The recorder main body 61 includes a memory card which is a detachable storage medium including an SD card or the like. The recorder main body 61 causes the memory card to store the imaging information including images respectively captured by the front camera 621 and the rear camera 631. Furthermore, the recorder main body 61 causes the memory card to store data of the position information input from the GPS antenna 64 while correlating the data with the imaging information. In a state where the memory card is removed from the recorder main body 61, the imaging information stored in the memory card can be read.

The recorder main body 61 is not limited to a mode in which the imaging information is stored in a detachable memory card. For example, the recorder main body 61 may contain a hard disk which is a fixed storage medium. In this case, it is conceivable to provide the recorder main body 61 with a cable connector as an opening for reading the imaging information from the hard disk. This enables read of the imaging information from the hard disk by, for example, inserting the other end of a cable having one end connected to an information apparatus such as a smartphone or a personal computer into the cable connector.

The front camera unit 62 is one kind of sensor unit. The front camera unit 62 is a unit including the front camera 621, which is one kind of sensor for detecting an object around the vehicle body 1. As illustrated in Figs. 2 and 3, the front camera unit 62 is fixed to the meter bracket 3 via the meter rubber member 31 together with the meter unit 181, which is one kind of the electrical component 18.

As described above, the meter bracket 3 is supported by the head pipe 211 located at the center in the vehicle width direction at the front end of the vehicle body frame 2 via the pair of left and right front forks 2A or the upper bracket 2AA. The meter unit 181 is fixed to the meter bracket 3 via the meter rubber member 31. Therefore, the front camera unit 62 is disposed ahead of the meter unit 181 positioned in front of the head pipe 211 in a state of being fixed to the meter bracket 3 together with the meter unit 181. As a result, the front camera unit 62 can be efficiently fixed to the meter bracket 3 to which the meter unit 181 is fixed such that the front camera unit 62 is disposed at an appropriate position where the front camera 621 can image the area in front of the vehicle body 1. In this case, the front camera unit 62 can be fixed to the meter bracket 3 to which the meter unit 181 required to be equipped when traveling on the public road is fixed. Moreover, using the meter rubber member 31 for use in fixing the meter unit 181 to the meter bracket 3, it is possible to suppress vibration of the front camera unit 62 during traveling of the vehicle body 1, or the like.

As illustrated in Fig. 3, the front camera unit 62 is fixed to the meter bracket 3 via the two meter rubber members 31 together with the meter unit 181. As described above, the two meter rubber members 31 are disposed in front of the head pipe 211 and between the pair of left and right front forks 2A, and are disposed side by side at a predetermined interval in the vehicle width direction in the vehicle width center region including the the center position in the vehicle width direction of the vehicle body 1. In a state where the front camera unit 62 is fixed to the meter bracket 3 via the two meter rubber members 31, the front camera 621 is disposed, in front of the meter unit 181, in the vehicle width center region including the the center position in the vehicle width direction of the vehicle body 1, and is disposed between the two meter rubber members 31 in the vehicle width direction. Thus, the front camera 621 is disposed between the two meter rubber members 31 in the vehicle width center region of the vehicle body 1, so that vibration of the front camera 621 can be effectively suppressed.

In addition, the pair of left and right front forks 2A or the upper bracket 2AA to which the meter bracket 3 is attached is turnable in accordance with the operation of the handlebars 16. Therefore, the front camera unit 62 fixed to the meter bracket 3 together with the meter unit 181 is turnable in accordance with the turning of the pair of left and right front forks 2A or the upper bracket 2AA. In a case where the front camera unit 62 turns in accordance with the operation of the handlebars 16, there is a possibility that the vibration of the front camera 621 increases. On the other hand, in the present embodiment in which the front camera unit 62 is fixed to the meter bracket 3 via the two meter rubber members 31, the front camera 621 is disposed between the two meter rubber members 31 in the vehicle width center region of the vehicle body 1. This prevents the structure for suppressing the vibration of the front camera 621 from becoming complicated, thereby enabling the vibration generated at the front camera 621 to be easily maintained within a preset allowable vibration range.

The front camera 621 of the front camera unit 62 is supported by a front camera bracket 622. The front camera bracket 622 is one kind of sensor bracket for supporting the front camera 621, which is one kind of sensor. The front camera bracket 622 includes a front camera support part 6221 that supports the front camera 621, and a fixing part 6222 fixed to the meter bracket 3.

The front camera support part 6221 is one kind of sensor support part. The front camera support part 6221 supports the front camera 621 in an attitude in which a lens part serving as an imaging visual field is directed forward so as to be able to image the area in front of the vehicle body 1. The front camera support part 6221 supports the front camera 621 via a base 623. In this case, the front camera 621 is attached to a side surface of the base 623 by a fastening member SC2 such as a screw member. An attaching attitude of the front camera 621 with respect to the base 623 can be adjusted around an axis of the fastening member SC2 extending in the vertical direction. The front camera 621 attached to the side surface of the base 623 is supported by the front camera bracket 622 when the base 623 is attached to the front camera support part 6221 by a fastening member SC3 such as a screw member. An insertion hole 622A through which the fastening member SC3 can be inserted in the vehicle width direction is formed in the front camera support part 6221, and a screw hole into which a screw part of the fastening member SC3 can be screwed is formed in the base 623 so as to extend in the vehicle width direction. The insertion hole 622A of the front camera support part 6221 has a hole diameter set larger than the screw hole of the base 623. Therefore, an attaching attitude of the base 623 with respect to the front camera support part 6221 can be adjusted around an axis of the fastening member SC3 extending in the vehicle width direction.

In other words, in the present embodiment in which the front camera 621 is supported by the front camera support part 6221 via the base 623, the attaching attitude of the front camera 621 with respect to the base 623 can be adjusted around the axis extending in the vertical direction, and the attaching attitude of the base 623 with respect to the front camera support part 6221 can be adjusted around the axis extending in the vehicle width direction. Therefore, a direction to which the lens part of the front camera 621 faces can be adjusted around the axis extending in the vertical direction and can be adjusted around the axis extending in the vehicle width direction.

The fixing part 6222 of the front camera bracket 622 is fastened and fixed to the meter bracket 3 jointly with the meter unit 181 via the meter rubber member 31 using the fastening member SC1. In other words, the front camera bracket 622 supporting the front camera 621 and the meter unit 181 can be fixed to the meter bracket 3 via the meter rubber member 31 by jointly fastening them using the fastening member SC1.

As illustrated in Fig. 2, the front camera unit 62 is covered with the meter cover 1813 while being fixed to the meter bracket 3 together with the meter unit 181. Specifically, the front camera unit 62 can be covered using the meter cover 1813 that covers the back surface of the meter casing 1812 facing the front and a part of the meter bracket 3 from the front. As a result, aesthetic appearance of a front part of the vehicle body 1 is improved, and the front camera unit 62 can be protected by the meter cover 1813.

The meter cover 1813 has a cover opening 181A that allows exposure of at least the lens part of the front camera 621 in a state where the front camera unit 62 is fixed to the meter bracket 3. In other words, the front camera unit 62 is covered with the meter cover 1813 such that the lens part of the front camera 621 is exposed through the cover opening 181A. As a result, the front camera 621 can image the area in front of the vehicle body 1 in the state where the front camera unit 62 is covered with the meter cover 1813.

The meter cover 1813 has a protruding part 1813a protruding forward at least on one side in the vehicle width direction with respect to an opening forming part where the cover opening 181A is formed. In the present embodiment, the meter cover 1813 has a pair of the protruding parts 1813a protruding forward on both sides in the vehicle width direction with respect to the opening forming part where the cover opening 181A is formed. As a result, an exposed part of the front camera 621 which is exposed from the cover opening 181A can be hidden by the protruding part 1813a of the meter cover 1813 in the side view of the vehicle body 1. Therefore, the exposed part of the front camera 621 which is exposed from the cover opening 181A can be prevented from standing out.

As illustrated in Fig. 2, a front camera harness 624 electrically conducted to a main body harness 611 connected to the recorder main body 61 is connected to the front camera 621. When a camera connector 6241 provided at one end of the front camera harness 624 is coupled to a main body connector 6111 provided at one end of the main body harness 611, the front camera harness 624 and the main body harness 611 are electrically conducted to each other. The camera connector 6241 and the main body connector 6111 are housed in the headlamp casing 1832 of the headlamp unit 183 located below the meter unit 181. As a result, as compared with a case where the camera connector 6241 and the main body connector 6111 are housed inside the meter cover 1813, it is easy to secure an arrangement space of the front camera unit 62 inside the meter cover 1813.

Next, the rear camera unit 63 will be described. The rear camera unit 63 is one kind of sensor unit. The rear camera unit 63 is a unit including the rear camera 631, which is one kind of sensor for detecting an object around the vehicle body 1. As illustrated in Figs. 4 and 5, the rear camera unit 63 is fixed to the rear flap 5 together with the license lamp unit 182, which is one kind of the electrical component 18, via the flap rubber member 51.

As described above, the rear flap 5 is supported at the rear end of the vehicle body frame 2 via the rear fender 4, and is disposed behind the rear end of the vehicle body frame 2 in this state. The license lamp unit 182 is fixed to the rear flap 5 by fixing the license lamp casing 1822 to the rear end of the rear flap 5 via the flap rubber member 51. The license lamp unit 182 protrudes rearward from the rear end of the rear flap 5 while being fixed to the rear flap 5 in this manner. Behind the rear end of the vehicle body frame 2, the rear camera unit 63 is disposed ahead of and above the license lamp unit 182 in a state of being fixed to the rear flap 5 together with the license lamp unit 182. As a result, the rear camera unit 63 can be efficiently fixed to the rear flap 5 to which the license lamp unit 182 is fixed such that the rear camera unit 63 is disposed at an appropriate position where the rear camera 631 can image the area behind the vehicle body 1. In this case, the rear camera unit 63 can be fixed to the rear flap 5 to which the license lamp unit 182 required to be equipped when traveling on a public road is fixed. Moreover, vibration of the rear camera unit 63 during traveling of the vehicle body 1, or the like, can be suppressed by using the flap rubber member 51 for use in fixing the license lamp unit 182 to the rear flap 5.

As illustrated in Fig. 5, the rear camera unit 63 is fixed to the rear flap 5 together with the license lamp unit 182 via the two flap rubber members 51. As described above, at the rear end of the rear flap 5, the two flap rubber members 51 are disposed side by side at a predetermined interval in the vehicle width direction with the the center position in the vehicle width direction of the vehicle body 1 interposed therebetween. In a state where the rear camera unit 63 is fixed to the rear flap 5 via the two flap rubber members 51, the rear camera 631 is disposed, ahead of and above the license lamp unit 182, at the center position in the vehicle width direction of the vehicle body 1, and is disposed between the two flap rubber members 51 in the vehicle width direction. As described above, the rear camera 631 is disposed between the two flap rubber members 51 at the center position in the vehicle width direction of the vehicle body 1, so that vibration of the rear camera 631 can be effectively suppressed.

As described above, the rear camera unit 63 is disposed behind the rear end of the vehicle body frame 2 in a state of being fixed to the rear flap 5 together with the license lamp unit 182. In this case, there is a possibility that the vibration of the rear camera 631 becomes large as compared with a case where the rear camera unit 63 is arranged at the rear end of the vehicle body frame 2. On the other hand, in the present embodiment in which the rear camera unit 63 is fixed to the rear flap 5 via the two flap rubber members 51, the rear camera 631 is disposed between the two flap rubber members 51 at the center position in the vehicle width direction of the vehicle body 1. This prevents the structure for suppressing the vibration of the rear camera 631 from becoming complicated, thereby enabling the vibration generated at the rear camera 631 to be easily maintained within a preset allowable vibration range.

The rear camera 631 of the rear camera unit 63 is supported by a rear camera bracket 632. The rear camera bracket 632 is one kind of sensor bracket for supporting the rear camera 631, which is one kind of sensor. The rear camera bracket 632 has a rear camera support part 6321 that supports the rear camera 631, and a fixing part 6322 fixed to the rear flap 5.

The rear camera support part 6321 is one kind of sensor support part. The rear camera support part 6321 supports the rear camera 631 in an attitude in which a lens part serving as an imaging visual field is directed backward so as to be able to image the area behind the vehicle body 1. The rear camera support part 6321 supports the rear camera 631 via a base 633. In this case, the rear camera 631 is attached to an upper surface of the base 633 by a fastening member SC5 such as a screw member. An attaching attitude of the rear camera 631 with respect to the base 633 can be adjusted around an axis of the fastening member SC5 extending in the vehicle width direction. The rear camera 631 attached to the upper surface of the base 633 is supported by the rear camera bracket 632 when the base 633 is attached to the rear camera support part 6321 by a fastening member SC6 such as a screw member. An insertion hole 632A through which the fastening member SC6 can be inserted in the vertical direction is formed in the rear camera support part 6321, and a screw hole into which a screw part of the fastening member SC6 can be screwed is formed in the base 633 so as to extend in the vertical direction. The insertion hole 632A of the rear camera support part 6321 has a hole diameter set larger than a screw hole of the base 633. Therefore, an attaching attitude of the base 633 with respect to the rear camera support part 6321 can be adjusted around an axis of the fastening member SC6 extending in the vertical direction.

Specifically, in the present embodiment in which the rear camera 631 is supported by the rear camera support part 6321 via the base 633, the attaching attitude of the rear camera 631 with respect to the base 633 can be adjusted around the axis extending in the vehicle width direction, and the attaching attitude of the base 633 with respect to the rear camera support part 6321 can be adjusted around the axis extending in the vertical direction. Therefore, a direction to which the lens part of the rear camera 631 faces can be adjusted around the axis extending in the vehicle width direction and can be adjusted around the axis extending in the vertical direction.

The fixing part 6322 of the rear camera bracket 632 is fastened and fixed to the rear flap 5 jointly with the license lamp unit 182 via the flap rubber member 51 using the fastening member SC4. In other words, the rear camera bracket 632 supporting the rear camera 631 and the license lamp unit 182 can be fixed to the rear flap 5 via the flap rubber member 51 by jointly fastening them using the fastening member SC4.

As illustrated in Fig. 4, the rear camera unit 63 is covered with the flap cover 52 in a state of being fixed to the rear flap 5 together with the license lamp unit 182. In other words, the rear camera unit 63 can be covered using the flap cover 52 covering the rear flap 5 from above. As a result, aesthetic appearance of a rear part of the vehicle body 1 is improved, and the rear camera unit 63 can be protected by the flap cover 52.

The flap cover 52 has a cover opening 52A that allows exposure of at least the lens part of the rear camera 631 in the state where the rear camera unit 63 is fixed to the rear flap 5. In other words, the rear camera unit 63 is covered with the flap cover 52 such that the lens part of the rear camera 631 is exposed through the cover opening 52A. As a result, the rear camera 631 can image the area behind the vehicle body 1 in the state where the rear camera unit 63 is covered with the flap cover 52.

As illustrated in Figs. 4 and 5, a rear camera harness 634 electrically conducted to the main body harness 611 connected to the recorder main body 61 is connected to the rear camera 631. The rear camera harness 634 is covered from above by the flap cover 52 in a state of being routed inside the rear flap 5.

In addition to the rear camera support part 6321 and the fixing part 6322, the rear camera bracket 632 for supporting the rear camera 631 may have an antenna support part 6323 for supporting the GPS antenna 64. In this case, the GPS antenna 64 can be disposed on the rear camera bracket 632 for supporting the rear camera 631. While being supported by the antenna support part 6323, the GPS antenna 64 is disposed inside the rear flap 5 and is covered by the flap cover 52 from above. In other words, in the state where the GPS antenna 64 is supported by the antenna support part 6323, the rear flap 5 and the flap cover 52 exist around the GPS antenna 64. As described above, the rear flap 5 and the flap cover 52 are made of a non-metallic, for example, synthetic resin. Therefore, the GPS antenna 64 is hardly affected by radio interference, and can receive the signal indicating the position information transmitted from the GPS satellite.

### [Modification]

Although in the above embodiment, the example in which the present disclosure is applied to a naked motorcycle has been described, the present disclosure is also applicable to a motorcycle of a type provided with a cowl that covers the vehicle body frame 2 from the outside. However, the present disclosure is particularly effective for a naked motorcycle.

Although in the above embodiment, the example in which the present disclosure is applied to a motorcycle that is one kind of straddle type vehicle has been described, the present disclosure is also applicable to other straddle type vehicles such as a tricycle and a four-wheeled buggy.

Although in the above embodiment, the example in which the engine 13 is provided as the driving source of the vehicle body 1 has been described, the driving source may be an electric motor. Furthermore, a hybrid structure may be used in which two or more different driving sources are combined, such as a combination of an engine and an electric motor.

In the above embodiment, the front camera unit 62 is fixed to the meter bracket 3 together with the meter unit 181, and the rear camera unit 63 is fixed to the rear flap 5 together with the license lamp unit 182. However, the fixing structure of the front camera unit 62 and the rear camera unit 63 is not limited thereto. The front camera unit 62 may be fixed to the meter bracket 3 together with the headlamp unit 183. The rear camera unit 63 may be fixed to the rear fender 4 together with the tail lamp unit 184.

Although in the above embodiment, the mode in which the front camera unit 62 and the rear camera unit 63 are included in the drive recorder 6 has been described, the present invention is not limited to such a mode. The imaging information obtained by the front camera 621 of the front camera unit 62 and the imaging information obtained by the rear camera 631 of the rear camera unit 63 may be used for controlling traveling of the vehicle body 1. In other words, the traveling control of the vehicle body 1 may be performed based on the imaging information obtained by the front camera 621 and the rear camera 631. Examples of the traveling control of the vehicle body 1 include adjustment control of a following distance, switching control between a high beam and a low beam in the headlamp 1831, display control of a passing vehicle, and the like.

Although in the above embodiment, the mode in which the sensor unit corresponds to the front camera unit 62 and the rear camera unit 63 has been described, the present invention is not limited to such a mode. The sensor unit may be any unit including a sensor for detecting an object around the vehicle body 1. The sensor unit may be a radar unit, a sonar unit, an antenna unit, or the like in addition to a camera unit including a camera that is one kind of sensor. The radar unit is a unit including, as a sensor, a radar that transmits an electromagnetic wave and acquires a reflected wave reflected by an object to detect a direction in which the object exists and a distance to the object. The sonar unit is a unit including, as a sensor, a sonar that transmits an ultrasonic wave and acquires a reflected wave reflected by an object to detect a distance to the object. The antenna unit is a unit including, as a sensor, a communication antenna such as an ETC antenna for use in an electronic toll collection system (ETC) that automatically pays for a toll road.

### [Conclusion]

The above embodiment and modifications are summarized as follows.

The straddle type vehicle according to one aspect of the present disclosure includes a vehicle body frame; a fixed member which is supported by the vehicle body frame and to which an electrical component is fixed; and a sensor unit including a sensor for detecting an object around a vehicle body and fixed to the fixed member together with the electrical component via a rubber member.

In this mode, the sensor unit is fixed t o the fixed member supported by the vehicle body frame together with the electrical component via the rubber member. Accordingly, it is possible to efficiently fix the sensor unit to the fixed member to which the electrical component is fixed without newly providing a fixing structure for fixing the sensor unit at an appropriate position with respect to the vehicle body frame. Moreover, vibration of the sensor unit during traveling of the vehicle, or the like, can be suppressed using the rubber member for use in fixing the electrical component to the fixed member.

In the above-described straddle type vehicle, the electrical component is an electrical component that is required to be equipped when traveling on a public road.

As the electrical components equipped on the straddle type vehicle, there are electrical components which are required to be equipped when the vehicle travels on a public road by safety standards of road transportation vehicles defined based on Road Trucking Vehicle Act. The sensor unit can be fixed to the fixed member to which such electrical component required to be equipped is fixed.

In the above-described straddle type vehicle, the sensor unit may include the sensor; and a sensor bracket having a sensor support part that supports the sensor and a fixing part that is jointly fastened and fixed to the fixed member by a fastening member via the rubber member.

In this mode, the sensor bracket supporting the sensor and the electrical component can be fixed to the fixed member by jointly fastening them with the fastening member.

The above-described straddle type vehicle may further include a cover member that covers the fixed member. In this case, the sensor unit may be covered with the cover member in a state of being fixed to the fixed member.

In this mode, the sensor unit can be covered using the cover member covering the fixed member. As a result, the appearance of the vehicle is improved, and the sensor unit can be protected by the cover member.

In the above-described straddle type vehicle, the electrical component may include a meter unit having a meter and a meter casing that houses the meter. In this case, the fixed member includes a meter bracket which is supported at a front end of the vehicle body frame and to which the meter unit is fixed, and the cover member includes a meter cover that covers a back surface of the meter casing facing the front and a part of the meter bracket from the front. Then, the sensor unit is covered with the meter cover while being fixed to the meter bracket together with the meter unit.

In this mode, the sensor unit can be fixed, together with the meter unit, to the meter bracket supported at the front end of the vehicle body frame. As a result, the sensor unit can be efficiently fixed to the meter bracket to which the meter unit is fixed. In addition, the sensor unit can be covered using the meter cover covering the back surface of the meter casing facing the front and a part of the meter bracket from the front.

In the above-described straddle type vehicle, the electrical component may include a lamp unit having a license lamp and a lamp casing that houses the license lamp. In this case, the fixed member includes a rear flap which is supported at a rear end of the vehicle body frame and to which the lamp unit is fixed, and the cover member includes a flap cover that covers the rear flap from above. Then, the sensor unit is covered with the flap cover in a state of being fixed to the rear flap together with the lamp unit.

In this mode, the sensor unit can be fixed, together with the lamp unit, to the rear flap supported at the rear end of the vehicle body frame. As a result, the sensor unit can be efficiently fixed to the rear flap to which the lamp unit is fixed. In addition, the sensor unit can be covered using the flap cover covering the rear flap from above.

The above-described straddle type vehicle may further include an antenna of a communication apparatus. In this case, the sensor bracket further has an antenna support part that supports the antenna.

In this mode, the antenna for a communication apparatus can be disposed on the sensor bracket for supporting the sensor.

## Claims

1. A straddle type vehicle comprising:
a vehicle body frame (2);
a fixed member (3, 5) which is supported by the vehicle body frame (2) and to which an electrical component (18) is fixed; and
a sensor unit (62, 63) including a sensor (621, 631) for detecting an object around a vehicle body and fixed to the fixed member (3, 5) together with the electrical component (18) via a rubber member (31, 51).

2. The straddle type vehicle according to claim 1, wherein
the electrical component (18) is an electrical component that is required to be equipped when traveling on a public road.

3. The straddle type vehicle according to claim 1 or 2, wherein
the sensor unit (62, 63) includes:
the sensor (621, 631); and
a sensor bracket (622, 632) having a sensor support part (6221, 6321) that supports the sensor (621, 631) and a fixing part (6222, 6322) that is jointly fastened and fixed to the fixed member (3, 5) by a fastening member via the rubber member (31, 51).

4. The straddle type vehicle according to any one of claims 1 to 3, further comprising
a cover member (1813, 52) that covers the fixed member (3, 5), wherein
the sensor unit (62, 63) is covered with the cover member (1813, 52) in a state of being fixed to the fixed member (3, 5).

5. The straddle type vehicle according to claim 4, wherein
the electrical component (18) includes a meter unit (181) having a meter (1811) and a meter casing (1812) that houses the meter (1811),
the fixed member includes a meter bracket (3) which is supported at a front end of the vehicle body frame (2) and to which the meter unit (181) is fixed,
the cover member includes a meter cover (1813) that covers a back surface of the meter casing (1812) facing the front and a part of the meter bracket (3) from the front, and
the sensor unit (62) is covered with the meter cover (1813) while being fixed to the meter bracket (3) together with the meter unit (181).

6. The straddle type vehicle according to claim 4, wherein
the electrical component (18) includes a lamp unit (182) having a license lamp (1821) and a lamp casing (1822) that houses the license lamp (1821),
the fixed member includes a rear flap (5) which is supported at a rear end of the vehicle body frame (2) and to which the lamp unit (182) is fixed,
the cover member includes a flap cover (52) that covers the rear flap (5) from above, and
the sensor unit (63) is covered with the flap cover (52) in a state of being fixed to the rear flap (5) together with the lamp unit (182).

7. The straddle type vehicle according to claim 3, further comprising
an antenna (64) of a communication apparatus, wherein
the sensor bracket (632) further has an antenna support part (6323) that supports the antenna (64).
